# EUROPÄISCHE PATENTSCHRIFT

(11) **EP 3 830 523 B1**
(45) Veröffentlichungstag und Bekanntmachung des Hinweises auf die Patenterteilung: **23.11.2022**
(21) Anmeldenummer: 19748490.0
(22) Anmeldetag: 25.07.2019
(51) Int. Cl.: G01C 21/32, G06F 16/29

(54) **VERFAHREN ZUR AKTUALISIERUNG EINER UMGEBUNGSKARTE, VORRICHTUNG FÜR DIE FAHRZEUGSEITIGE DURCHFÜHRUNG VON VERFAHRENSSCHRITTEN DES VERFAHRENS, FAHRZEUG, VORRICHTUNG FÜR DIE ZENTRALRECHNERSEITIGE DURCHFÜHRUNG VON VERFAHRENSSCHRITTEN DES VERFAHRENS SOWIE COMPUTERLESBARES SPEICHERMEDIUM**
METHOD FOR UPDATING AN MAP OF THE SURROUNDING AREA, DEVICE FOR EXECUTING METHOD STEPS OF SAID METHOD ON THE VEHICLE, VEHICLE, DEVICE FOR EXECUTING METHOD STEPS OF THE METHOD ON A CENTRAL COMPUTER, AND COMPUTER-READABLE STORAGE MEDIUM
PROCÉDÉ POUR LA MISE À JOUR D'UNE CARTE DES ENVIRONS, DISPOSITIFS POUR L'EXÉCUTION CÔTÉ VÉHICULE D'ÉTAPES DU PROCÉDÉ, VÉHICULE, DISPOSITIF POUR L'EXÉCUTION CÔTÉ ORDINATEUR CENTRAL D'ÉTAPES DU PROCÉDÉ AINSI QUE SUPPORT DE STOCKAGE LISIBLE PAR ORDINATEUR

(30) Priorität: 27.07.2018 DE 102018118215
(43) Veröffentlichungstag der Anmeldung: 09.06.2021
(73) Patentinhaber: VOLKSWAGEN AKTIENGESELLSCHAFT, 38440 Wolfsburg (DE); MAN Truck & Bus SE, 80995 München (DE)
(72) Erfinder: WILBERS, Daniel, 38440 Wolfsburg (DE); MERFELS, Christian, 38102 Braunschweig (DE); RECH, DR., Bernd, 38556 Bokensdorf (DE); SCHAPER, Thilo, 31275 Lehrte (DE); KOCH, Niklas, DE 38479 Tappenbeck (DE); JÜRGENS, DR., Stefan, 38106 Braunschweig (DE); PERDOMO LOPEZ, David, 38100 Braunschweig (DE); HUNGAR, Constanze, DE 38100 Braunschweig (DE)
(74) Vertreter: Schmidt-Uhlig, Thomas
(86) Internationale Anmeldenummer: PCT/EP2019/070041
(87) Internationale Veröffentlichungsnummer: WO 2020/021009

(56) Entgegenhaltungen:
- DE-A1-102014 217 847
- DE-A1-102016 008 175
- US-A1- 2008 262 717

## Beschreibung

Verfahren zur Aktualisierung einer Umgebungskarte, Vorrichtung für die fahrzeugseitige Durchführung von Verfahrensschritten des Verfahrens, Fahrzeug, Vorrichtung für die zentralrechnerseitige Durchführung von Verfahrensschritten des Verfahrens sowie computerlesbares Speichermedium

In naher Zukunft werden autonome Fahrsysteme in den Fahrzeugen eingesetzt, die es ermöglichen, dass der Fahrer nicht mehr dauerhaft mit der Fahraufgabe beschäftigt ist und bei aktivem Fahrsystem Nebentätigkeiten (Lesen, Schlafen, Nachrichten schreiben...) durchführen kann.

Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomem Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Auch der Verband der Automobilindustrie VDA gibt eine eigene Definition der verschiedenen Stufen im Automatisierungsgrad heraus.

Automatisierte Fahrfunktionen ab Stufe 3 nehmen dem Fahrer die Verantwortung für die Steuerung des Fahrzeugs ab. Für solche automatisierten Fahrsysteme ist die Eigenlokalisierung des Fahrzeuges immens wichtig. Dafür reicht die Positionsbestimmung basierend auf den bekannte GNSS-Systemen, entsprechend Global Navigation Satellite System, wie GPS (Global Positioning System) nicht aus. Um die Genauigkeit bei der Positionsbestimmung zu erhöhen, werden in den automatisierten Fahrsystemen hochgenaue Umgebungskarten eingesetzt. Das Fahrzeug "scannt" die Umgebung ab, dafür werden bildgebende Sensoren wie Videokamera, Infrarotkamera, LIDAR-Sensoren (Light Detection and Ranging), RADAR-Sensoren (Radio Detection and Ranging) und Ultraschall-Sensoren eingesetzt. Durch Auswertung der von den Sensoren aufgenommenen Bilder werden die Abstände zu bestimmten in der Karte verzeichneten Umgebungsmerkmalen, die auch als Landmarken bezeichnet werden, bestimmt. Daraus ergibt sich dann eine verbesserte Genauigkeit bei der Eigenlokalisierung. Damit lassen sich dann neuere autonome Fahrfunktionen oder neuere Fahrerassistenzsysteme, wie ein "Baustellenassistent" realisieren.

Für die Eigenlokalisierung von automatisch fahrenden Fahrzeugen sind bereits verschiedene Konzepte bekannt. Bei einigen werden Strukturen und Muster in der Fahrzeugumgebung, zusammengefasst als Umgebungsmerkmale bezeichnet, (z.B. Landmarken) von den Fahrzeugsensoren erkannt und mit entsprechenden Eintragungen in einer Karte verglichen, welche im Fahrzeug verfügbar ist (z. B. "Road DNA^{™} des Unternehmens tomtom, Road Data Base^{™} der Kooperationspartner Continental und Ygomi, etc.). Diese Konzepte erfordern eine möglichst genaue und aktuelle Karte mit den eingetragenen Umgebungsmerkmalen.

Der Begriff Umgebungsmerkmal betrifft allgemein charakteristische Merkmale in der Umgebung eines Objektes. Im Folgenden wird häufig synonym von einer Landmarke gesprochen. Unter dem Begriff Landmarke wird häufig ein deutlich sichtbares Umgebungsmerkmal verstanden. Beispiele von Landmarken betreffen ein aufgestelltes Küstenseezeichen wie einen Leuchtturm oder ein anderes auffälliges, meist weithin sichtbares topographisches Objekt. Dementsprechend können beispielsweise Kirchen, Türme, Windräder, Burgen, Berge oder freistehende markante große Bäume Landmarken darstellen. Sie spielen bei der räumlichen Orientierung und terrestrischen Navigation eine wichtige Rolle und werden daher auf Karten gegebenenfalls durch besondere Kartenzeichen markiert. Es kann sich aber auch um ein auf der Fahrbahn deutlich sichtbares Umgebungsmerkmal handeln, wie Fahrbahnmarkierungen auf der Fahrbahn, z.B. Fahrstreifenmarkierungen, Richtungspfeile, Haltelinien, usw.

Aus der DE 10 2014 217 847 A1 ist ein Fahrerassistenzsystem, ein Verkehrstelematiksystem und ein Verfahren zum Aktualisieren einer digitalen Karte bekannt. Wenn eine Abweichung zwischen einer in der Karte verzeichneten Landmarke und der von den Umgebungssensoren erfassten Umgebung erkannt wird, erfolgt ein Abgleich mit den durch benachbarte Fahrzeuge ermittelten Gegebenheiten in der Umgebung. Wenn mehrere Fahrzeuge die gleiche Beobachtung melden, wird die Abweichung zur Aktualisierung der digitalen Karte verwendet.

Aus der DE 10 2015 010 542 A1 ist ein Verfahren zur Erzeugung einer digitalen Umgebungskarte bekannt. Dabei werden Objekte oder Hindernisse von Umgebungssensoren erfasst. Dabei wird eine von dem Fahrzeug tatsächlich befahrene Route mit einer Route in der Umgebungskarte verglichen und basierend darauf aktualisierte Karteninformationen erzeugt und in der Umgebungskarte gespeichert.

Aus der DE 10 2016 008 175 A1 ist ein Verfahren zum Aktualisieren einer elektronischen Landkarte bekannt. Dabei werden die von den Umgebungssensoren eines Fahrzeuges abgeleiteten Objektdaten an eine externe Recheneinrichtung übertragen. Die externe Recheneinrichtung nutzt diese Objektdaten und erzeugt eine aktualisierte elektronische Landkarte.

Aus der US 2008/0262717 A1 ist ein Verfahren zur landmarkenbasierten Routenführung bekannt. Bei dem Verfahren werden Routenführungsinformationen erzeugt, die eine oder mehrere straßenbasierte Referenzen und eine oder mehrere landmarkenbasierte Referenzen enthalten.

Die Karten müssen also häufig aktualisiert werden. Dies geschieht per Download über eine Fahrzeugeigene Kommunikationsschnittstelle. Nun ist es aber so, dass in dem Moment, wo eine Karte aktualisiert wurde, sie bereits wieder veraltet ist. Auf den Straßen, wie auch in der Umgebung der Straßen, gibt es ständig Veränderungen, z.B. durch Baustellen, so dass Landmarken, die in der Karte verzeichnet sind, verschwinden oder verdeckt werden und neue Landmarken hinzukommen. Es ist also erforderlich, dass die Richtigkeit von in der Karte verzeichneten Landmarken ständig überwacht werden muss. Dies geschieht mit den Umgebungssensoren. Stellen die Umgebungssensoren einen Widerspruch zur auf der digitalen Karte gespeicherten Information fest, kann die Position des Fahrzeugs nicht mehr verlässlich mit hoher Genauigkeit bestimmt werden. Es ist dann also erforderlich, die Position mit zusätzlichen Maßnahmen zu ermitteln. Landmarken, die in der Karte noch verzeichnet sind, in Wirklichkeit aber schon gar nicht mehr vorhanden sind, sollten schnellstmöglich aus der Karte gelöscht werden, damit bei der Eigenlokalisierung wie auch bei der Lokalisierung von Fahrzeugen in der Umgebung keine Fehler passieren.

Die vorliegende Erfindung behandelt das Problem der Aktualisierung der Karte. Hierbei besteht eine der Aufgaben darin, zu ermitteln, ob in der Karte eingetragene Umgebungsmerkmale zu löschen sind, weil sie nicht mehr existieren, neue Umgebungsmerkmale in der Karte hinzuzufügen sind oder die Eintragungen korrigiert werden müssen, z. B. aufgrund baulicher Veränderungen.

Die Aufgabe kann wiederum im zwei Teile unterteilt werden: Die Erfassung der Umgebungsmerkmale durch die Sensorik eines Fahrzeugs, die Vorverarbeitung im Fahrzeug sowie die Auswertung der Informationen eines oder bevorzugt mehrerer Fahrzeuge in einer externen zentralen Recheneinheit (Backend-Server) und das Erstellen und Veröffentlichen des Karten-Updates.

Die Erfindung setzt sich zur Aufgabe, eine Lösung zu finden, wie veraltete in der Karte eingetragene Umgebungsmerkmale zu finden und zu löschen sind, die in der realen Umgebung nicht mehr existieren. Die Lösung soll kostenoptimiert sein, jedoch gleichzeitig die Sicherheitsanforderungen erfüllen.

Diese Aufgabe wird durch ein Verfahren zur Aktualisierung einer Umgebungskarte, die bei der Steuerung eines Fahrzeuges zum Einsatz kommt gemäß Anspruch 1, eine Vorrichtung für die fahrzeugseitige Durchführung von Verfahrensschritten des Verfahrens gemäß Anspruch 10, ein Fahrzeug gemäß Anspruch 13, eine Vorrichtung für die zentralrechnerseitige Durchführung von Verfahrensschritten des Verfahrens gemäß Anspruch 14 sowie ein computerlesbares Speichermedium gemäß Anspruch 15 gelöst.

Die abhängigen Ansprüche beinhalten vorteilhafte Weiterbildungen und Verbesserungen der Erfindung entsprechend der nachfolgenden Beschreibung dieser Maßnahmen.

Das vorgeschlagene Verfahren zur Aktualisierung einer Umgebungskarte beinhaltet die folgenden Verfahrensschritte. Die Umgebungskarte kommt typischerweise bei der Steuerung eines Fahrzeuges zum Einsatz. Nach dem vorgeschlagenen Verfahren unternimmt das Fahrzeug bei Befahren einer Fahrbahn den Versuch, eine in der Umgebungskarte (UK) verzeichnete Landmarke sensorisch zu erfassen. Dabei wird von dem Fahrzeug, wenn die Landmarke sensorisch nicht erfasst werden konnte, eine Löschhypothese erstellt, die an einen externen Zentralrechner (Backend-Server) gesendet wird. Die Löschhypothese wird in dem externen Zentralrechner überprüft und bei Verifikation der Löschhypothese wird die Landmarke entsprechend der Löschhypothese aus der Umgebungskarte gelöscht. Das Verfahren zeichnet sich dadurch aus, dass in der Umgebungskarte eine Information über einen Sichtbereich für die Landmarke eingetragen wird, der angibt, in welchem Bereich die Landmarke von einer Straße aus sichtbar ist. Die Angabe des Sichtbereiches erlaubt eine wesentliche effektivere Erfassung von in der Umgebungskarte verzeichneten Landmarken. Wenn klar ist, dass das Fahrzeug noch außerhalb des Sichtbereiches der Landmarke fährt, braucht die komplizierte sensorische Erfassung und/oder Auswertung der Sensordaten nicht durchgeführt werden. Dazu werden in dem Fahrzeug bei einer Auswertung der Umgebungskarte die in die Umgebungskarte eingetragenen Information über den Sichtbereich für die zu erfassende Landmarke ausgewertet. Dies gestattet es einerseits, eine kostengünstigere Recheneinrichtung für die Sensordaten-Auswertung einzusetzen. Andererseits reduziert es den Stromverbrauch, was einerseits umweltschonend ist und andererseits die Reichweite bei Elektrofahrzeugen verlängert. Des Weiteren wird auch die Datenmenge für die Übertragung zum Backend reduziert. Es können dadurch die Übertragungskosten für die Inanspruchnahme des Mobilfunkservice reduziert werden. Und es müssen weniger Löschhypothesen im Backend bearbeitet werden.

Es gibt verschiedene vorteilhafte Varianten für die Angabe des Sichtbereiches. Eine Variante ist die Angabe des Sichtbereiches durch Angabe der Kreissegmente eines Kreises, in dessen Zentrum die Landmarke positioniert ist. Hier muss allerdings das Fahrzeug einen Kreis um die Landmarke im Zentrum berechnen, den Sichtbereich festlegen und berechnen, ob es schon in den Sichtbereich eingefahren ist.

Etwas weniger rechenaufwendig ist die Angabe der Fahrbahn-Segmente einer Fahrbahn, die das Fahrzeug befährt, von denen aus die Landmarke erfassbar ist, in der Umgebungskarte. Die Position des Fahrzeuges ist über das GNSS-Navigationssystem mit relativ guter Genauigkeit bekannt und das Fahrzeug kann damit leicht überprüfen, ob es schon im Sichtbereich fährt.

Dabei ist es von Vorteil, wenn die Fahrbahn-Segmente eine definierte Länge aufweisen und nur diejenigen Fahrbahn-Segmente der Fahrbahn, die das Fahrzeug befährt, in die Umgebungskarte als Sichtbereich eingetragen werden, in denen die Landmarke bei Durchfahren des Fahrbahn-Segmentes vollständig sensorisch erfassbar bleibt. So werden Fehlversuche bei der Erfassung der Landmarke in mutmaßlich gültigen Fahrbahn-Segmenten vermieden.

Ein weitere Alternative bei der Angabe des Sichtbereichs besteht darin, durch Angabe einer Anzahl von weiteren Landmarken, von denen zu der überprüften Landmarke eine Sichtlinie besteht, in die Umgebungskarte einzutragen. Dadurch kann indirekt eine Erwartungshaltung ermittelt werden, ob ein Umgebungsmerkmal sichtbar sein müsste. Diese Variante ist je nach Umgebung eventuell weniger genau, verringert aber den Datenaufwand für die Angabe des Sichtbereiches.

Sehr vorteilhaft ist noch, um die Genauigkeit bei der Angabe des Sichtbereiches zu erhöhen, wenn die Angabe des Sichtbereiches separat für die verschiedenen Fahrstreifen einer Fahrbahn erfolgt.

Eine weitere vorteilhafte Maßnahme besteht darin, eine zeitweilige Verdeckung von Landmarken durch Hindernisse zu erfassen und die sensorische Erfassung von Landmarken auf denjenigen Fahrbahn-Abschnitten auszusetzen, auf denen durch sensorische Erfassung ein Hindernis erkannt wurde, durch das eine Sichtlinie zu solchen Landmarken blockiert wird. Dies verringert in erheblicher Weise den fahrzeugseitigen Rechenaufwand für die sensorische Erfassung von Landmarken.

Eine weitere vorteilhafte Maßnahme besteht darin, eine mehrmalige aufeinanderfolgende Erfassung der Landmarke durchzuführen, um die Löschhypothese abzusichern, wobei für die mehrmalige aufeinanderfolgende Erfassung der Landmarke eine Mindestfahrstrecke vorgegeben wird, die das Fahrzeug zurückgelegt haben muss bevor es die nächste Erfassung der Landmarke versucht. So wird sichergestellt, dass die jeweilige Erfassung der Landmarke aus einer anderen Perspektive erfolgt.

Bevorzugt versendet der Zentralrechner eine Anforderung an eine Anzahl weiterer Fahrzeuge, die in dem Gebiet, in dem die betreffende Landmarke lokalisiert ist, unterwegs sind, zur Überprüfung der Löschhypothese. Diese Fahrzeuge versuchen daraufhin ihrerseits, die betreffende Landmarke sensorisch zu erfassen und senden einen Bericht über das Versuchsergebnis an den externen Zentralrechner zurück.

Die Löschhypothese wird dann verifiziert, wenn durch statistische Auswertung der Berichte über die Versuchsergebnisse eine ausreichende Sicherheit besteht, dass die Löschhypothese richtig ist.

Für eine fahrzeugseitige Vorrichtung ist es vorteilhaft, wenn die Vorrichtung für die fahrzeugseitige Durchführung des Verfahrens ausgelegt ist Dabei ist es vorteilhaft, wenn die Vorrichtung mit wenigstens einer Recheneinrichtung ausgestattet ist, die dafür eingerichtet ist, wenigstens die Schritte Auswertung der Daten für die sensorische Erfassung einer Landmarke, Aufstellen einer Löschhypothese bei Scheitern der sensorischen Erfassung der Landmarke und Auswertung einer Umgebungskarte für die sensorische Erfassung der Landmarke durchzuführen, wobei die Recheneinrichtung bei der Auswertung der Umgebungskarte die in der Umgebungskarte eingetragene Information über den Sichtbereich für die zu erfassende Landmarke auswertet. Damit ist der für den entsprechenden Verfahrensschritt bereits oben genannte Vorteil verbunden. Gleichermaßen ist es vorteilhaft, wenn die Recheneinrichtung eingerichtet ist, die Daten von Umgebungssensoren dahingehend auszuwerten, ob eine zeitweilige Verdeckung von Landmarken durch Hindernisse gegeben ist und die sensorische Erfassung von Landmarken auf denjenigen Fahrbahn-Abschnitten auszusetzen, auf denen durch die sensorische Erfassung ein Hindernis erkannt wurde, durch das eine Sichtlinie zu solchen Landmarken blockiert wird.

Für die weitere Absicherung der Löschhypothese ist es vorteilhaft, wenn die Recheneinrichtung eingerichtet ist, eine mehrmalige aufeinanderfolgende Erfassung der Landmarke durchzuführen, um die Löschhypothese abzusichern, wobei für die mehrmalige aufeinanderfolgende Erfassung der Landmarke eine Mindestfahrstrecke vorgegeben wird, die das Fahrzeug zurückgelegt haben muss bevor es die nächste Erfassung der Landmarke versucht. Dadurch wird die Zuverlässigkeit der Absicherung gesteigert, weil es sichergestellt wird, dass die Landmarke aus mehreren verschiedenen Perspektiven nicht mehr erfasst werden konnte.

Die beschriebene Vorrichtung kann vorteilhaft in Fahrzeugen eingesetzt werden, die eine hochgenaue Umgebungskarte verwenden, um die Eigenlokalisierung für eine autonome Fahrfunktion durchzuführen.

Für eine zentralrechnerseitige Vorrichtung ist es vorteilhaft, wenn die Vorrichtung für die zentralrechnerseitige Durchführung des Verfahrens ausgelegt ist Dabei besteht eine vorteilhafte Variante darin, dass die Vorrichtung wenigstens eine Recheneinrichtung aufweist, die eingerichtet ist, eine Umgebungskarte zu aktualisieren und in die Umgebungskarte eine Information über einen Sichtbereich für eine Landmarke einzutragen, der angibt, in welchem Bereich die Landmarke von einer Straße aus sichtbar ist.

Weiterhin kann der Vorschlag als computerlesbares Speichermedium realisiert werden. Dieses Speichermedium kann bei dem erfindungsgemäßen Verfahren verwendet werden und auch bei den erfindungsgemäßen Vorrichtungen. Erfindungsgemäß ist in dem computerlesbaren Speichermedium eine Umgebungskarte abgespeichert, in die eine Information über einen Sichtbereich für eine Landmarke eingetragen ist, der angibt, in welchem Bereich die Landmarke von einer Straße aus sichtbar ist.

Mehrere Ausführungsbeispiele der Erfindung sind in den Zeichnungen dargestellt und werden nachfolgend anhand der Figuren näher erläutert.

Es zeigen:
- Fig. 1: eine Darstellung des Gesamtsystems mit einer Anzahl an Flotten-Fahrzeugen, die über Mobilfunk ans Internet angebunden sind und mit einem Backend-Server kommunizieren, der im Internet erreichbar ist;
- Fig. 2: das typische Cockpit eines Fahrzeuges;
- Fig. 3: ein Blockschaltbild der Kfz-Elektronik des Fahrzeuges;
- Fig. 4: den Ablauf des Verfahrens zur automatischen Löschung nicht mehr existenter Landmarken in einer Karte;
- Fig. 5: eine Darstellung eines Sichtbarkeitsbereiches einer Landmarke, die zwischen zwei Häusern einer Häuserzeile lokalisiert ist;
- Fig. 6: ein erstes Beispiel der Quantifizierung des Sichtbarkeitsbereiches der Landmarke durch Angabe eines Sichtbarkeitswinkels;
- Fig. 7: ein zweites Beispiel der Quantifizierung des Sichtbarkeitsbereiches der Landmarke durch Angabe von Wegstrecken-Segmenten;
- Fig. 8: ein drittes Beispiel der Quantifizierung des Sichtbarkeitsbereiches der Landmarke durch Angabe der gleichzeitig sichtbaren anderen Landmarken; und
- Fig. 9: eine Illustration des Problems der dynamischen Einschränkung des Sichtbereiches bei Vorbeifahrt an einem stehenden oder fahrenden Lastkraftwagen.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

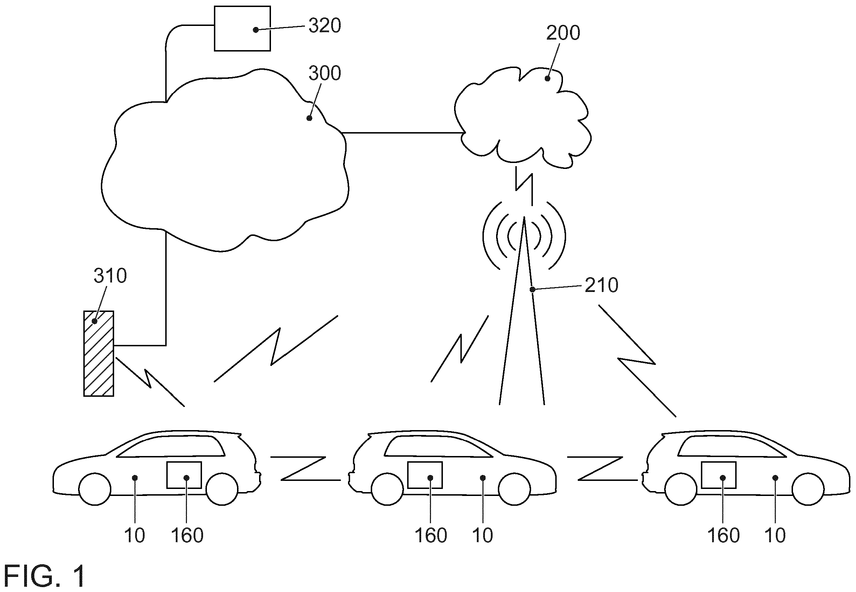

Fig. 1 zeigt die Anbindung von Fahrzeugen 10 über Mobilfunk an das Internet 300 und im Besonderen zu einer externen zentralen Recheneinheit 320, nachfolgend Backend-Server genannt, die im Internet 300 erreichbar ist.

Für die Bereiche kooperative Fahrmanöver oder autonomes Fahren ist eine Fahrzeugkommunikation, auch eine direkte Fahrzeug-zu-Fahrzeugkommunikation, und ggfs. auch noch eine Fahrzeug-zu-Infrastrukturkommunikation erforderlich. Alle drei verschiedenen Kommunikationsarten sind in Fig. 1 dargestellt. Die Anbindung an das Internet 300 geschieht über Mobilfunkkommunikation. Dabei kommuniziert ein im Fahrzeug 10 verbautes Kommunikationsmodul 160 mit einer Mobilfunk-Basisstation 210, in dessen Abdeckungsbereich das Fahrzeug 10 unterwegs ist. Die Basisstation 210 steht über ein EPC-Netzwerk 200 des Mobilfunkbetreibers, entsprechend Evolved Packet Core, mit dem Internet 300 in Verbindung. So kann das Fahrzeug 10 mit dem Backend-Server 320 kommunizieren, der im Internet 300 erreichbar ist.

Solche Mobilfunktechnologien sind standardisiert und es wird hier auf die entsprechenden Spezifikationen von Mobilfunkstandards verwiesen. Als modernes Beispiel für einen Mobilfunkstandard wird auf die 3GPP-Initiative und den LTE-Standard (Long Term Evolution) verwiesen. Viele der zugehörigen ETSI-Spezifikationen sind derzeit in der Version 14 verfügbar. Als Beispiel aus Version 13 wird folgendes genannt: ETSI TS 136 213 V13.0.0 (2016-05); es handelt sich um einen weiterentwickelten universellen terrestrischen Funkzugang (E-UTRA); Bitübertragungsschicht (3GPP TS 36.213 Version 13.0.0 Release 13).

LTE steht für hohe Übertragungsraten und kurze Antwortzeiten. Die Erhöhung der Übertragungsrate wird in LTE durch bessere Modulationsverfahren, flexiblere Frequenznutzung und größere Kanalbandbreiten erreicht. Gemäß der Spezifikation hat LTE derzeit eine Übertragungsrate von mehr als 300 MBit / s im Downlink und 75 MBit / s im Uplink pro 20 MHz-Band, mathematisch und weniger Overhead.

Wenn die Fahrzeuge untereinander Daten austauschen müssen, findet eine Fahrzeug-zu-Fahrzeug-Kommunikation statt. Dafür stehen verschiedene Kommunikationssysteme zur Verfügung. Beispiele sind die WLAN-basierte Fahrzeugdirektkommunikation entsprechend des Standards IEEE 802.11p und Fahrzeugdirektkommunikation im Bereich von Mobilfunknetzen. Bei dem Mobilfunk-Standard der vierten Generation, entsprechend Long Term Evolution LTE heißt diese Variante LTE-V, im Fall der 5G-Initiative heißt diese Variante D2D, entsprechend Device to Device-Kommunikation. Daneben gibt es noch die sogenannte Fahrzeug-zu-Infrastruktur-Kommunikation. Dabei kommuniziert ein Fahrzeug mit den Infrastruktur-Komponenten, z.B. den sogenannte Road-Side Units RSU 310. Wenn diese Infrastruktur-Komponenten auch mit dem Backend-Server 320 in Verbindung stehen, kann die Kommunikation mit dem Backend-Server 320 auch über die Fahrzeug-zu-Infrastruktur-Kommunikation erfolgen.

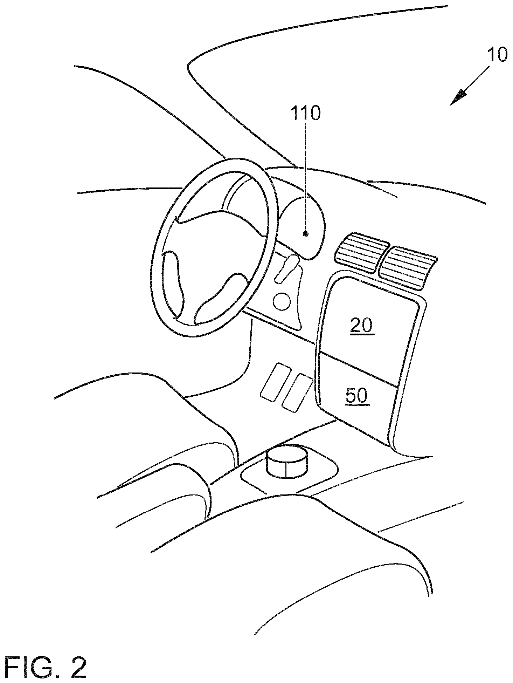

Fig. 2 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Fahrräder, Motorräder, Busse, Nutzfahrzeuge, insbesondere Lastkraftwagen Lkw, Landmaschinen, Baumaschinen, Schienenfahrzeuge, usw. Der Einsatz der Erfindung wäre allgemein bei Landfahrzeugen, inklusive Robotern, Schienenfahrzeugen, Wasserfahrzeugen und Luftfahrzeugen, inklusive Drohnen, möglich.

In dem betrachteten Fall wird davon ausgegangen, dass das Fahrzeug 10 mit einem oder mehreren Fahrerassistenzsystemen ausgestattet ist und einen Automatisierungsgrad ab Stufe 3 nach Definition des VDA erfüllt. Eine wesentliche Komponente des Cockpits ist eine Anzeigeeinheit 20 eines Infotainment-Systems. Es handelt sich um einen berührungsempfindlichen Bildschirm 20, der in der Mittelkonsole angebracht ist. Der berührungsempfindliche Bildschirm 20 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 20 ("Touchscreen") benutzt, wobei dieser Bildschirm 20 insbesondere von einem Fahrer des Fahrzeugs 10, aber auch von einem Beifahrer des Fahrzeugs 10 gut eingesehen und bedient werden kann. Unterhalb des Bildschirms 20 können zudem mechanische Bedienelemente, beispielsweise Tasten, Drehregler oder Kombinationen hiervon, wie beispielsweise Drehdrückregler, in einer Eingabeeinheit 50 angeordnet sein. Typischerweise ist auch eine Lenkradbedienung von Teilen des Infotainment-Systems möglich. Dafür sind die Fahrzeuge 10 mit einer sogenannten Multifunktionslenkrad-Bedienung ausgestattet. Diese Einheit ist nicht separat dargestellt, sondern wird als Teil der Eingabeeinheit 50 betrachtet. Auch der große dargestellt Drehdrückregler im unteren Teil der Mittelkonsole wird als Teil der Eingabeeinheit betrachtet.

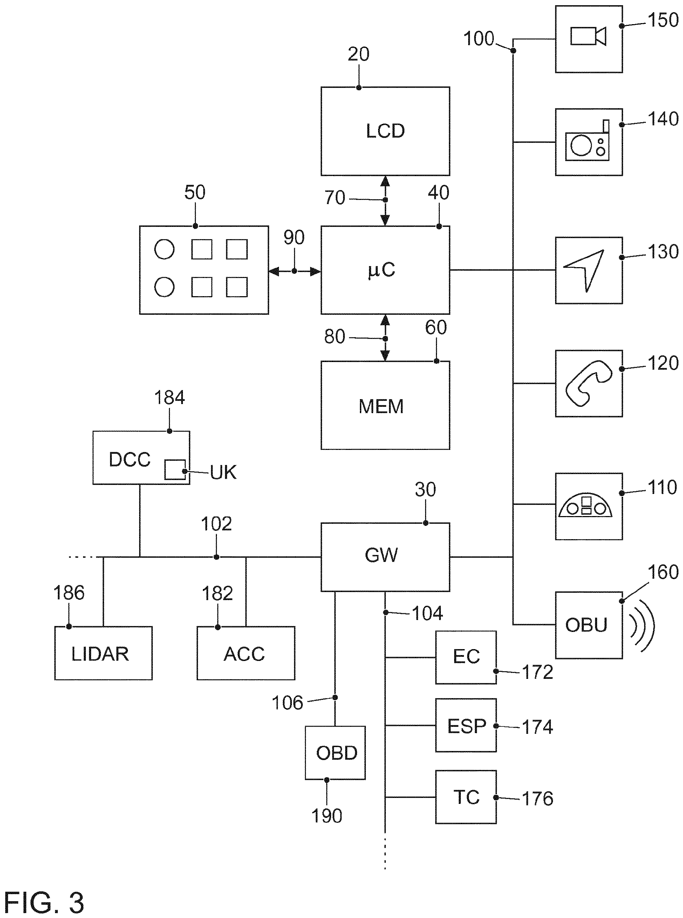

Fig. 3 zeigt schematisch ein Blockschaltbild der Kfz-Elektronik sowie beispielhaft einige Teilsysteme oder Applikationen des Infotainment-Systems. Das Infotainment-System umfasst neben weiteren Komponenten: die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für mögliche Einblendungen von Zusatzinformationen.

Die weiteren Komponenten des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Für die drahtlose Kommunikation nach innen und außen ist das Fahrzeug 10 mit einem Kommunikationsmodul 160 ausgestattet. Dieses Modul wird oft auch als On-Board Unit oder auch als On-Board Connectivity Unit bezeichnet. Es kann für die MobilfuncKommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Der Kommunikationsbus 100 des Infotainment-Systems ist mit einem Gateway 30 verbunden. Daran angeschlossen sind auch die anderen Teile der Kfz-Elektronik. Zum Einen der Kommunikationsbus 104 des Antriebstrangs, der typischerweise in Form des CAN-Bus realisiert wird. Als Beispiele sind die Steuergeräte des Antriebstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind zwei Fahrerassistenzsysteme dargestellt: ein Fahrerassistenzsystem 182 zur automatischen Abstandsregelung ACC entsprechend Adaptive Cruise Control, ein Fahrerassistenzsystem DCC zur adaptiven Fahrwerksregelung 184, entsprechend Dynamic Chassis Control und ein LIDAR-Sensor 186, entsprechend Light Detection and Ranging. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetaucht werden können. In gezeigten Ausführungsbeispiel macht das Fahrerassistenzsystem DCC für die Fahraufgabe von einer hochgenauen Umgebungskarte Gebrauch. Die Umgebungskarte kann in einer ersten Ausführungsform vorab in einem Speicher des Fahrerassistenzsystems DCC abgespeichert werden. Dazu wird sie üblicherweise über das Kommunikationsmodul 160 geladen, von dem Gateway 30 weitergeleitet und in den Speicher des Fahrerassistenzsystem 184 geschrieben. In einer anderen Variante wird nur ein Ausschnitt einer Umgebungskarte geladen und in den Speicher des Fahrerassistenzsystems geschrieben. Dies ermöglicht es, dass ein kleinerer Speicher in dem Fahrerassistenzsystem 184 vorgesehen werden kann und verringert die Kosten. Die hochgenaue Umgebungskarte kann für ein Land wie Deutschland schon einige Gigabyte an Daten bedeuten.

Das Fahrzeug 10 ist mit den beiden Umgebungssensoren Videokamera 150 und LIDAR-Sensor 186 ausgestattet. Typischerweise sind sogar mehrere Videokameras 150 (FrontKamera, Heck-Kamera, Seitenkamera links, Seitenkamera rechts) in dem Fahrzeug 10 verbaut. So ist es möglich, durch Bildverarbeitung eine Rundumsicht für das Fahrzeug 10 zu erzeugen. Der LIDAR-Sensor 186 wird typischerweise im Frontbereich des Fahrzeuges 10 verbaut und erfasst die Umgebung in Fahrtrichtung des Fahrzeuges 10. Daneben könnten auch noch Ultraschallsensoren und RADAR-Sensoren eingesetzt werden.

Die genannten Umgebungssensoren, die in der Lage sind, das Umfeld des Fahrzeuges zu erfassen, sind für unterschiedliche Entfernungen und unterschiedliche Einsatzzwecke einzusetzen. Es gelten in etwa die folgenden Reichweiten- und Zweckangaben:
- Eine Stereo-Kamera, Reichweite 500m, dient zur Erfassung einer 3D-Karte, benutzt für einen automatischen Notbremsassistenten, Spurwechselassistenten, zur Verkehrsschilderkennung und einen Abstandsregeltempomaten.
- Kamera, Reichweite 100 m, dient zur Erfassung einer 3D-Karte, benutzt für einen automatischen Notbremsassistenten, Spurwechselassistenten, zur Verkehrsschilderkennung, einen Abstandsregeltempomaten, zur Frontaufprallwarnung, automatischer Lichtsteuerung und einen Parkassistenten.
- Ultraschallsensor, Reichweite <10m, Parkassistent.
- Radar-Sensor, Reichweite 20 cm bis 100 m, benutzt für einen automatischen Notbremsassistenten, zur automatischen Geschwindigkeitsregelung, einen Abstandsregeltempomaten, einen Totwinkelassistenten, einen Querverkehralarmgeber
- Lidar-Sensor, Reichweite 100 m, dient zur Erfassung einer 3D-Karte, benutzt für einen automatischen Notbremsassistenten.

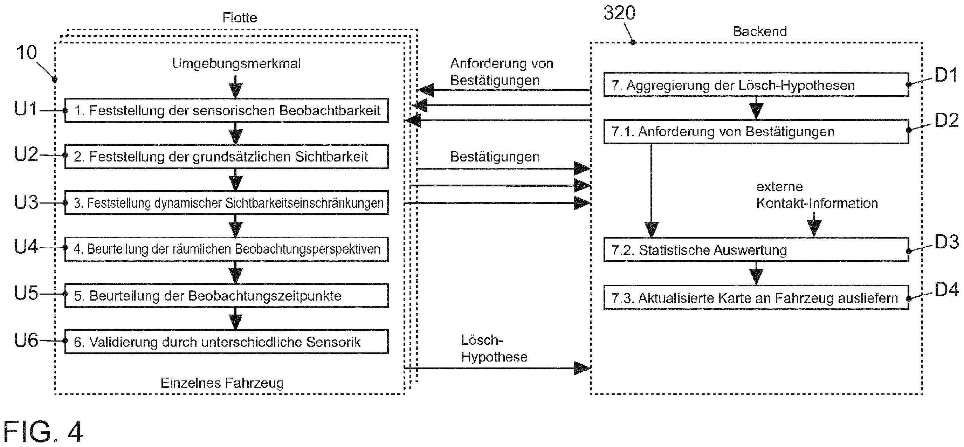

Zur Feststellung, ob ein Merkmal aus einer Karte gelöscht werden kann, werden folgende Verfahrensschritte durchgeführt, die anhand des in der Fig. 4 dargestellten Ablaufplanes erläutert werden.

Fig. 4 zeigt auf der linken Seite die einzelnen Verfahrensschritte, die im Fahrzeug 10 einer Fahrzeug-Flotte durchgeführt werden. Als Fahrzeug-Flotte kann hier allgemein eine Gruppe von Fahrzeugen einer Organisation betrachtet werden. Im Besonderen kann es sich um die Fahrzeuge eines oder mehrerer besonderer Fahrzeugtypen eines Fahrzeugherstellers handeln. In dem Fall können die Halter dieser Fahrzeuge auch die Endkunden sein. Es wäre auch denkbar, alle Fahrzeuge mit einer besonderen Zusatzausstattung als Teil einer Fahrzeugflotte anzusehen.

Auf der rechten Seite sind die Verfahrensschritte gezeigt, die in dem Backend-Server 320 durchgeführt werden.

Zunächst werden die Schritte beschrieben, die im einzelnen Fahrzeug 10 ablaufen. Das Ablaufdiagramm für diese Schritte kann wie ein Flussdiagramm für ein Computerprogramm angesehen werden, das in einer Recheneinheit des Fahrzeuges 10 zur Abarbeitung kommt. In einer Ausführungsform ist die Recheneinheit Teil des Fahrerassistenzsystems 184. In einer anderen Variante wird das Programm von der Recheneinheit 40 des Infotainmentsystems abgearbeitet. Zunächst wird im Schritt U1 aus der Karte ein in der Nähe befindliches Umgebungsmerkmal bestimmt. Die Position des Fahrzeuges 10 ist zumindest über das GNSS-System grob bekannt. Als Umgebungsmerkmal kommt z.B. eine Landmarke in Betracht. Unter einer Landmarke wird hier ein deutlich sichtbares Umgebungsmerkmal verstanden. Es kann sich um ein in der Natur vorkommendes meist weithin sichtbares topographisches Objekt wie einen Baum, Felsen, Berggipfel und dergleichen handeln. Andere Beispiele betreffen die eingangs genannten Landmarken wie Kirchen, Türme, Windräder, Burgen aber auch am Straßenrand aufgestellte Landmarken wie Ampeln, Straßenschilder, Verkehrsschilder, Straßenlaternen, Brücken, Entfernungsmarken, Häuserkanten.

Im Verfahrensschritt U1 erfolgt eine Feststellung, ob das bestimmte Umgebungsmerkmal überhaupt mit den Umgebungssensoren 150, 186 des Fahrzeuges 10 erfassbar ist. Ein Umgebungsmerkmal ist dann grundsätzlich beobachtbar, wenn die Sensorik des Fahrzeuges physikalisch in der Lage ist, dieses zu erfassen. Beispielsweise kann ein Kameratyp mit hoher Auflösung mehr Umgebungsmerkmale wahrnehmen als eine Kamera mit sehr niedriger Auflösung. Die sensorische Beobachtbarkeit hängt von der jeweiligen Sensorausstattung des Fahrzeuges 10 ab. Zum Beispiel lassen sich weiter entfernte Objekte in einer Entfernung von 100 m und mehr nicht mit Ultraschallsensoren erfassen. Mit VideoKamera, LIDAR-Sensor hingegen schon. Sind nur Videokameras verbaut, so lassen sich die Landmarken nicht im Dunkeln erfassen.

Im zweiten Schritt U2 erfolgt die Feststellung der grundsätzlichen Sichtbarkeit. Das bedeutet, es erfolgt eine Beurteilung, ob aus einer bestimmten Position heraus ein Umgebungsmerkmal ohne zusätzliche Störungen grundsätzlich sichtbar wäre. Dies wäre z.B. dann nicht gegeben, wenn z. B. eine Verdeckung durch ein Gebäude, an dem das Fahrzeug 10 vorbeifährt, erfolgt.

Ein Umgebungsmerkmal ist dann grundsätzlich aus einer Position sichtbar, wenn aus dieser ohne zusätzliche temporäre oder dauerhafte Verdeckung eine Sichtverbindung besteht. Die Sicht wird oft durch Gebäude, Straßenschilder, die Geländetopologie usw. eingeschränkt.

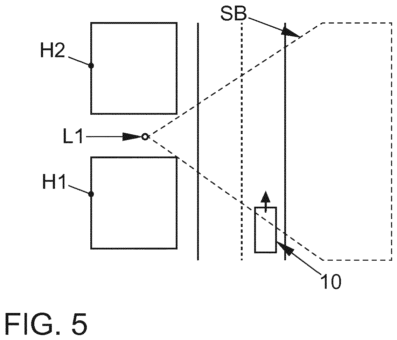

Deshalb wird es hier neu vorgeschlagen, zusätzlich zu den Informationen eines Umgebungsmerkmals noch den Sichtbereich, unter dem das Umgebungsmerkmal von der Straße aus sichtbar ist, anzugeben. Fig. 5 zeigt eine Illustration, wie das gemeint ist, an einem Beispiel. Dort ist eine Landmarke L1 zwischen zwei Häusern H1 und H2, die entlang einer Straße gebaut wurden, lokalisiert. Der Sichtbereich ist grau unterlegt und mit Bezugszeichen SB markiert. Der Sichtbereich ist abhängig von der Umgebungsstruktur. Liegen Informationen über den Sichtbereich einer Landmarke vor, kann das Fahrzeug 10 eine Erwartungshaltung über die Erkennung der Landmarke bestimmen. Wie kann nun der Sichtbereich in der Karte für die Landmarke L1 angegeben werden?

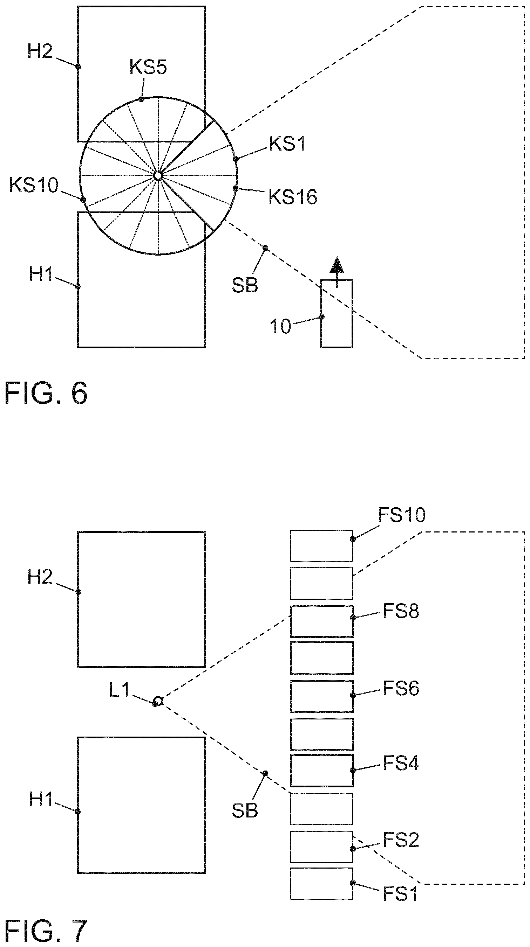

Hierfür sind verschiedene Repräsentationen denkbar. Option A (siehe Fig. 6) beschreibt die Darstellung der Sichtbarkeit in Form eines Winkel-Histogramms. Dazu wird um die Landmarke L1 herum ein Kreis gezogen, in dessen Zentrum die Landmarke L1 positioniert ist. Der Radius ist in dem gezeigten Beispiel so bemessen, dass er dem Abstand von der Landmarke L1 bis zum Fahrbahnrand entspricht. In anderen Beispielen kann er auch anders bemessen sein. Sodann wird der Kreis in Kreissegmente KS1 - KS16 eingeteilt. Im gezeigten Beispiel wird der Kreis in 16 gleich große Kreissegmente KS1 - KS16 eingeteilt. Jedes Kreissegment KS1 - KS16 hat einen Winkel von 22,5°. Bei der Abspeicherung des Sichtbereiches werden die Kreissegmente KS1 - KS16 angegeben, in denen die Landmarke L1 von der Straße aus sichtbar sind, auch wenn die Landmarke nicht im ganzen Kreissegment KS1 - KS16 sichtbar ist. In Fig. 6 sind diese Kreissegmente KS15, KS16, KS1, KS2 grau unterlegt. In dieser Form wird die Sichtbarkeit einer Landmarke als Histogramm über Sichtbarkeitswinkel repräsentiert. Die abgespeicherten Winkel können zur Laufzeit überprüft werden. Initial ist eine Herleitung über die geometrischen Informationen in der Karte möglich.

Bei Option B (siehe Fig. 7) wird vorgeschlagen, die Straße in geeignet große Fahrbahn-Segmente FS1 - FS10 einzuteilen, für die in der Karte angegeben wird, welche Umgebungsmerkmale aus dem jeweiligen Fahrbahn-Segment FS1 - FS10 ohne zusätzliche Störungen sichtbar sind. Hier wird allerdings nach Fahrspuren getrennt. Die Fahrbahn-Segmente FS1 - FS10 sind von bestimmter Größe. Im Beispiel von Fig. 7 sind die Fahrbahn-Segmente FS1 - FS10, von denen die Landmarke L1 sichtbar ist, durch einen Grauton hervorgehoben. Die Größe der Fahrbahn-Segment FS1 - FS10 kann variabel festgelegt werden, z.B. als Funktion von dem Abstand der Landmarke L1 zur Straße. In dieser Form wird die Straße in Segmente unterteilt. Zu jedem Umgebungsmerkmal werden die Segment-IDs gespeichert, aus denen die Landmarke sichtbar ist.

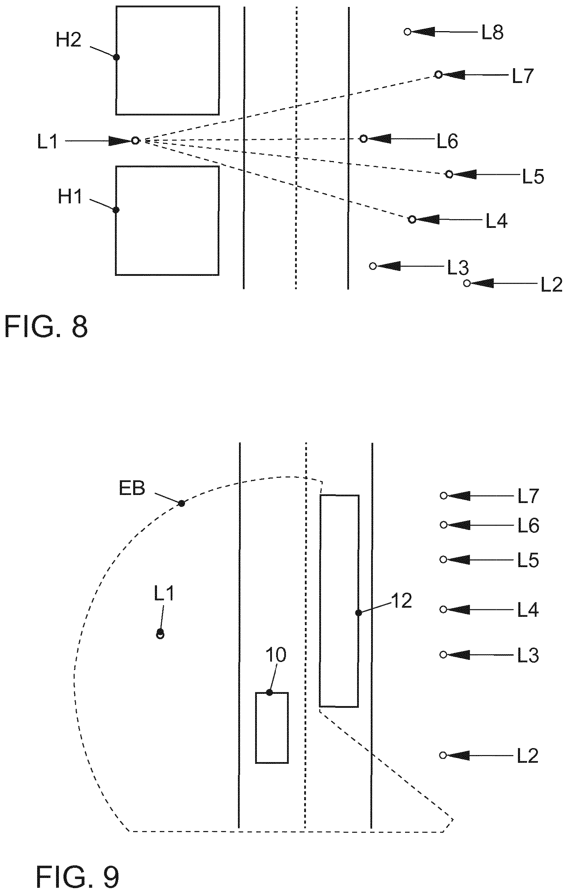

Weiterhin wird noch ein indirekter Ansatz vorgeschlagen, bei dem zu jeder Landmarke abgespeichert wird, welche weiteren Landmarken zu dieser Landmarke Sichtverbindung haben. Diese Option ist in der Fig. 8 dargestellt. Für die Landmarke L1 wird abgespeichert, dass von ihr Sichtverbindung zu den Landmarken L4, L5, L6 und L7 besteht. Zu jedem Umgebungsmerkmal wird abgespeichert, welche anderen Landmarken gleichzeitig sichtbar sind. Dadurch kann indirekt eine Erwartungshaltung ermittelt werden, ob ein Umgebungsmerkmal sichtbar sein müsste.

Für alle Varianten gilt: Grundsätzlich ist es vorstellbar, dass sich bei einer Straße mit mehreren Fahrstreifen die Sichtbereiche auf ein Umgebungsmerkmal für die einzelnen Fahrstreifen unterscheiden. Daher wird weiterhin vorgeschlagen, falls erforderlich, für ein Umgebungsmerkmal die Sichtbarkeit je Fahrstreifen anzugeben. Zum Beispiel wird dies für die Option B (s. Fig. 7) für notwendig erachtet.

Im nächsten Schritt U3 erfolgt eine Beurteilung, ob aus einer bestimmten Position heraus ein Umgebungsmerkmal von anderen Objekten verdeckt wird. Die Problematik ist in der Fig. 9 dargestellt. Dort ist dargestellt, dass ein Fahrzeug 10 an einem stehenden oder sich bewegenden Lkw 12 vorbeifährt. Der Erfassungsbereich für einen Sensor des Fahrzeuges ist in der Fig. 9 mit EB bezeichnet. Die Landmarke L1 bleibt dabei weiterhin sichtbar, allerdings werden die anderen Landmarken L2 bis L7 von dem Lkw 12 bei der Vorbeifahrt verdeckt. Das Erscheinen des Lkw 12 wird sensorisch erfasst, z.B. durch Bildauswertung der von der Videokamera 150 gelieferten Bilder. Dafür sind spezielle Objekterkennungsalgorithmen einsetzbar. Im einfachsten Fall wird bei Erkennung einer solchen Verdeckung die Erfassung von Landmarken zeitweise ausgesetzt.

Der weitere Schritt U4 betrifft die Detektion eines Umgebungsmerkmals aus verschiedenen Perspektiven bzw. von verschiedenen Orten aus. Es muss vor dem Löschen einer nicht mehr erkannten Landmarke berücksichtigt werden, ob ausreichend unterschiedliche Perspektiven, aus denen die Landmarke hätte gesehen werden können, betrachtet wurden. Die Detektion von Umgebungsmerkmalen erfolgt mehrfach pro Sekunde (z. B. 20 Hz), wobei die einzelnen Sensoren typischerweise synchronisiert sind. Zwischen den einzelnen Detektionszeitpunkten hat das Fahrzeug 10 einen geschwindigkeitsabhängigen Weg zurückgelegt. Dadurch ergibt sich automatisch, dass die Detektion während der Fahrt zu den verschiedenen Zeitpunkten aus unterschiedlichen Perspektiven erfolgt. Allerdings ist der zurückgelegte Weg bei geringen und mittleren Geschwindigkeiten nur gering. Deshalb wird hier für ein Verringerung des Erfassungsaufwandes vorgeschlagen, für den Zweck der Beurteilung des Fehlens von Umgebungsmerkmalen einen Mindestabstand der Messungen festzulegen. Z.B. kann festgelegt werden, dass die Mindestfahrstrecke zwischen zwei aufeinanderfolgenden Messungen 10 m betragen soll.

Der nächste Schritt U5 betrifft die mehrfache Erfassung einer Landmarke zu verschiedenen Zeitpunkten von demselben Fahrzeug 10 aus. Um die Einflüsse temporärer Effekte zu minimieren, könnten im Rahmen der Bewertung Messungen des Fahrzeugs von verschiedenen Fahrten auf der Strecke und damit also Messungen von verschiedenen Zeitpunkten ausgewertet werden. Dies setzt voraus, dass die Strecke tatsächlich in nicht allzu großem zeitlichen Abstand wieder befahren wird. Im allgemeinen Fall kann dies zwar nicht angenommen werden, allerdings zu bestimmten Zwecken finden häufig Fahrten auf immer denselben Strecken statt (z. B. täglicher Weg zur Arbeit, zur Schule, zum Einkaufen, zum Tanken usw.). Nach Erfassung der Landmarke L1 würde in diesem Schritt untersucht werden, ob diese Landmarke auf einer solchen Strecke liegt, die nach dem elektronischen Fahrtenbuch häufiger befahren wird. Das Programm errechnet sodann in diesem Schritt eine Prognose, die aussagt, wann die Strecke wahrscheinlich wieder befahren wird. Es erfasst dann bei den weiteren Fahrten auf dieser Strecke ebenfalls die Landmarke L1. Wenn genügend Beobachtungen vorliegen, kann die Beobachtung als zuverlässig eingestuft werden.

Im Schritt U6 wird noch eine Detektion eines Umgebungsmerkmals durch verschiedene Sensoren eines Fahrzeugs, z. B. beim Vorbeifahren zunächst durch eine Frontkamera und später durch eine Heckkamera (entsprechend auch durch z. B. Front- und Heck-Lidar), zur zusätzlichen Absicherung durchgeführt.

Um Sensoreinflüsse zu minimieren, werden die Detektionsergebnisse verschiedener Fahrzeugsensoren miteinander verglichen. Voraussetzung ist natürlich, dass sie in der Lage sind, das selbe Umgebungsmerkmal zu detektieren. Dadurch können auch die Detektionsergebnisse verschiedener Sensortypen miteinander verglichen werden. Z. B. können sowohl der LIDAR-Sensor 186 als auch die Kamera 150 stangenförmige Umgebungsmerkmale (bspw. Straßenlaternen) detektieren.

Nach Durchführen der verschiedenen Verfahrensschritte generiert das Fahrzeug 10 eine Löschhypothese für eine noch in der Karte verzeichnete Landmarke, die aber mit der Fahrzeugsensorik nicht erkannt werden konnte. Die Löschhypothese könnte schon nach dem Verfahrensschritt U2 formuliert werden. Sie wird aber erst nach der weiteren Absicherung in den Verfahrensschritten U4 - U6 an den Backend-Server 320 gesendet. Dabei sind die Schritte U5 und U6 optional und können je nach Anforderung und Ausstattung der Fahrzeuge inkludiert werden.

Im Rahmen der Bewertungsstrategie muss entschieden werden, inwieweit auf der Basis von Einzelfahrten eines Fahrzeugs 10 eine Landmarke gelöscht werden soll. Das Zusammenführen und Bewerten von Informationen von mehreren Fahrten von einem Fahrzeug oder auch von mehreren Fahrzeugen erfolgt im Backend-Server 320.

Der Backend-Server 320 kann von dem Dienstleister, der die Umgebungskarten zur Verfügung stellt, betrieben werden. Die eigentliche Löschung von Landmarken in der Karte erfolgt im Backend-Server. Der Kartendienstleister wird die jeweils aktuelle Karte den Fahrzeugen zur Verfügung stellen. Da jeweils nur Kartenausschnitte von den Fahrzeugen 10 geladen werden, wirkt sich die Löschung einer Landmarke nur auf den Kartenausschnitt aus, in dem sie vorher verzeichnet war. Bevor eine Landmarke, zu der eine Löschhypothese von einem Fahrzeug 10 gesendet wurde, tatsächlich gelöscht wird, werden verschiedene Verfahrensschritte im Backend-Server 320 durchlaufen.

Diese Verfahrensschritte sind im rechten Teil der Fig.4 gezeigt und werden nachfolgend im Einzelnen beschrieben.

Um die Einflüsse temporärer Effekte und Detektionsfehler zu minimieren, werden im Backend Informationen von mehreren Fahrzeugen zusammengeführt und ausgewertet. Dies ist ein entscheidender Schritt, um ein fehlerhaftes Löschen eines Umgebungsmerkmales aus der Karte zu vermeiden. Sobald ein Fahrzeug unter Beachtung der Schritte U1 - U6 feststellt, dass ein Umgebungsmerkmal gelöscht werden sollte, wird diese Lösch-Hypothese zusammen mit den Randbedingungen ihrer Ermittlung (z. B. Zeitpunkt, Perspektiven, verwendete Sensoren, gegebenenfalls Wetterinformationen, etc.) an den Backend-Server 320 geschickt. Diese werden zunächst gesammelt. Dies erfolgt im Schritt D1.

Sobald ausreichend viele Fahrzeuge eine Lösch-Hypothese zu einer Landmarke gesendet haben, werden in dem gezeigten Ausführungsbeispiel weitere Fahrzeuge, die in der Nähe der betroffenen Landmarke unterwegs sind im Schritt D2 aufgefordert, die Landmarke zu erfassen. Hierbei werden insbesondere Fahrzeuge adressiert, die bisher noch keine Lösch-Hypothese gesendet haben. Die aufgeforderten Fahrzeuge halten bei der Befahrung der entsprechenden Straßenabschnitte Ausschau nach der von den anderen Fahrzeugen nicht mehr gefundenen Landmarke. Wenn sie die Landmarke, wie in der Karte eingetragen, gefunden haben beziehungsweise nicht gefunden haben, senden sie ihren Bericht über ihre Beobachtung an den Backend-Server 320 unter Angabe der Randbedingungen der Messung (z. B. Zeitpunkt, Perspektiven, verwendete Sensoren, gegebenenfalls Wetterinformationen etc.). Aus Datenschutzgründen kann der Informationsaustausch anonymisiert erfolgen.

Im Schritt D3 erfolgt dann die statistische Auswertung der Bestätigungen und Lösch-Hypothesen. Weil bei der Detektion von Umgebungsmerkmalen grundsätzlich sowohl Falsch-Positive- (ein Umgebungsmerkmal, das als vorhanden erkannt wurde, jedoch in Wirklichkeit nicht mehr vorhanden ist) als auch Falsch-Negative-Meldungen (ein Umgebungsmerkmal, das als nicht mehr vorhanden erkannt wurde, jedoch in Wirklichkeit noch vorhanden ist) zu erwarten sind, werden die vom Backend-Server 320 gesammelten Informationen mit statistischen Verfahren validiert. Ziel ist es festzustellen, ob ein Umgebungsmerkmal tatsächlich physikalisch entfernt worden ist. Hierzu können zusätzlich zu den bereits empfangenen Randbedingungen externe Kontext-Informationen (bspw.: Wetterbedingungen, Informationen über Baustellen,... ), die nicht aus dem Fahrzeug stammen, genutzt werden. Außerdem kann festgestellt werden, ob ein Umgebungsmerkmal nur durch eine bestimmte Sensorklasse erkannt werden kann (z. B. ab einer bestimmten Auflösung) und durch andere Klassen nicht. In diesem Fall ist die Lösch-Hypothese zwar nicht bestätigt, aber für bestimmte Fahrzeuge ist das Umgebungsmerkmal dennoch nicht detektierbar. Es wird deshalb vorgeschlagen in dem Fall eine entsprechende Zusatzinformation für die entsprechende Landmarke in der Karte einzutragen.

Dafür kann bei solchen Umgebungsmerkmalen diese sensorabhängige Sichtbarkeitsinformation in der Karte als Attribut an das Umgebungsmerkmal angeheftet werden. Dies verhindert dann das unnötige Versenden von Lösch-Hypothesen an den Backend-Server 320 durch solche Fahrzeuge, da diese zukünftig diese Information in Schritt U1 berücksichtigen können.

Wenn dann von mehreren weiteren Fahrzeugen bestätigt wird, dass die betroffene Landmarke nicht mehr erfasst werden konnte, wurde die von dem Fahrzeug 10 versandte Löschhypothese gefestigt.

Schließlich erfolgt im Schritt D4 das Löschen der Landmarke, wenn die Löschhypothese verifiziert werden konnte. Es wird eine aktualisierte Version des betroffenen Kartenausschnitts erstellt und den Fahrzeugen zur Verfügung gestellt. Wie beschrieben, werden in einem Ausführungsbeispiel nur Kartenausschnitte von den Fahrzeugen geladen. In einem anderen Ausführungsbeispiel könnten komplette Karten für ein oder mehrere Länder den Fahrzeugen per Download zur Verfügung gestellt werden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 10: Fahrzeug
- 20: berührungsempfindliche Anzeigeeinheit
- 30: Gateway
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrwerk-Steuergerät
- 186: Lidar-Sensor
- 190: On-Board Diagnosestecker
- 200: Evolved Packet Core
- 210: Mobilfunk-Basisstation
- 300: Internet
- 310: Funkbake
- 320: Backend-Zentralrechner
- U1 - U5: verschiedene Schritte die im Fahrzeug abgearbeitet werden
- D1 - D4: verschiedene Schritte die im Backend-Server abgearbeitet werden
- H1 - H2: Häuser
- L1 - L8: Landmarken
- SB: Sichtbereich
- KS1 - KS16: Kreissegmente
- FS1 - FS10: Fahrbahn-Segmente

## Patentansprüche

1. Verfahren zur Aktualisierung einer Umgebungskarte, die bei der Steuerung eines Fahrzeuges (10) zum Einsatz kommt, wobei ein Fahrzeug (10) bei Befahren einer Fahrbahn versucht, eine in der Umgebungskarte (UK) verzeichnete Landmarke (L1) sensorisch zu erfassen, wobei, wenn die Landmarke (L1) sensorisch nicht erfasst werden konnte, von dem Fahrzeug (10) eine Löschhypothese erstellt wird, die an einen externen Zentralrechner (320) gesendet wird, und wobei die Löschhypothese in dem externen Zentralrechner (320) überprüft wird und bei Verifikation der Löschhypothese die Landmarke (L1) entsprechend der Löschhypothese aus der Karte (UK) gelöscht wird, **dadurch gekennzeichnet, dass** in der Umgebungskarte (UK) eine Information über einen Sichtbereich (SB) für die Landmarke (L1) eingetragen wird, der angibt, in welchem Bereich die Landmarke (L1) von einer Straße aus sichtbar ist, wobei in dem Fahrzeug (10) bei einer Auswertung der Umgebungskarte (UK) ein Schritt der Auswertung der in die Umgebungskarte (UK) eingetragenen Information über den Sichtbereich (SB) für die zu erfassende Landmarke (L1) durchgeführt wird.

2. Verfahren nach Anspruch 1, wobei der Sichtbereich (SB) durch Angabe der Kreissegmente (KS1 - KS16) eines Kreises, in dessen Zentrum die Landmarke (L1) positioniert ist, in die Umgebungskarte (UK) eingetragen wird, oder wobei der Sichtbereich (SB) durch Angabe der Fahrbahn-Segmente (FS1 - FS10) einer Fahrbahn, die das Fahrzeug (10) befährt, von denen aus die Landmarke (L1) erfassbar ist, in die Umgebungskarte (UK) eingetragen wird.

3. Verfahren nach Anspruch 2 in seiner zweiten Alternative, wobei die Fahrbahn-Segmente (FS1 - FS10) eine definierte Länge aufweisen und nur diejenigen Fahrbahn-Segmente der Fahrbahn (FS1 - FS10), die das Fahrzeug (10) befährt, in die Umgebungskarte (UK) als Sichtbereich (SB) eingetragen werden, in denen die Landmarke (L1) bei Durchfahren des Fahrbahn-Segmentes (FS1 - FS10) vollständig sensorisch erfassbar bleibt.

4. Verfahren nach Anspruch 1, wobei die Angabe des Sichtbereich (SB) durch Angabe einer Anzahl von weiteren Landmarken (L4 - L7), von denen zu der überprüften Landmarke (L1) eine Sichtlinie besteht, in die Umgebungskarte (UK) eingetragen wird.

5. Verfahren nach einem der vorhergehenden Ansprüche, wobei die Angabe des Sichtbereiches separat für die verschiedenen Fahrstreifen einer Fahrbahn erfolgt.

6. Verfahren nach einem der vorhergehenden Ansprüche, wobei eine zeitweilige Verdeckung von Landmarken durch Hindernisse erfasst wird und wobei die sensorische Erfassung von Landmarken (L3 - L7) auf denjenigen Fahrbahn-Abschnitten ausgesetzt wird, auf denen durch sensorische Erfassung ein Hindernis erkannt wurde, durch das eine Sichtlinie zu solchen Landmarken (L3 - L7) blockiert wird.

7. Verfahren nach einem der vorhergehenden Ansprüche, wobei eine mehrmalige aufeinanderfolgende Erfassung der Landmarke (L1) erfolgt, um die Löschhypothese abzusichern, wobei für die mehrmalige aufeinanderfolgende Erfassung der Landmarke eine Mindestfahrstrecke vorgegeben wird, die das Fahrzeug zurückgelegt haben muss bevor es die nächste Erfassung der Landmarke versucht.

8. Verfahren nach einem der vorhergehenden Ansprüche, wobei zur Überprüfung der Löschhypothese von dem externen Zentralrechner (320) eine Anforderung an eine Anzahl weiterer Fahrzeuge, die in dem Gebiet in dem die betreffende Landmarke (L1) lokalisiert ist, unterwegs sind, gesendet wird, die daraufhin ihrerseits versuchen, die betreffende Landmarke (L1) sensorisch zu erfassen und einen Bericht über das Versuchsergebnis an den externen Zentralrechner (320) zurücksenden.

9. Verfahren nach Anspruch 8, wobei die Löschhypothese verifiziert wird, wenn durch statistische Auswertung der Berichte über die Versuchsergebnisse eine ausreichende Sicherheit besteht, dass die Löschhypothese richtig ist.

10. Vorrichtung für die fahrzeugseitige Durchführung des Verfahrens nach einem der vorhergehenden Ansprüche, wobei die Vorrichtung mit wenigstens einer Recheneinrichtung (184, 40) ausgestattet ist, die dafür eingerichtet ist, die Schritte Auswertung der Daten für die sensorische Erfassung einer Landmarke (L1), Aufstellen einer Löschhypothese bei Scheitern der sensorischen Erfassung der Landmarke (L1) und Auswertung einer Umgebungskarte (UK) für die sensorische Erfassung der Landmarke (L1) durchzuführen, wobei die Recheneinrichtung (184, 40) bei der Auswertung der Umgebungskarte (UK) die in der Umgebungskarte (UK) eingetragene Information über den Sichtbereich für die zu erfassende Landmarke (L1) auswertet.

11. Vorrichtung nach Anspruch 10, wobei die Recheneinrichtung (184, 40) eingerichtet ist, die Daten von Umgebungssensoren (150, 186) dahingehend auszuwerten, ob eine zeitweilige Verdeckung von Landmarken (L3 - L7) durch Hindernisse gegeben ist und die sensorische Erfassung von Landmarken (L3 - L7) auf denjenigen Fahrbahn-Abschnitten auszusetzen, auf denen durch die sensorische Erfassung ein Hindernis erkannt wurde, durch das eine Sichtlinie zu solchen Landmarken (L3 - L7) blockiert wird.

12. Vorrichtung nach Anspruch 10 oder 11, wobei die Recheneinrichtung (184, 40) eingerichtet ist, eine mehrmalige aufeinanderfolgende Erfassung der Landmarke (L1) durchzuführen, um die Löschhypothese abzusichern, wobei für die mehrmalige aufeinanderfolgende Erfassung der Landmarke (L1) eine Mindestfahrstrecke vorgegeben wird, die das Fahrzeug (10) zurückgelegt haben muss bevor es die nächste Erfassung der Landmarke (L1) versucht.

13. Fahrzeug, **dadurch gekennzeichnet, dass** das Fahrzeug (10) eine Vorrichtung nach einem der Ansprüche 10 bis 12 aufweist.

14. Vorrichtung für die zentralrechnerseitige Durchführung des Verfahrens nach einem der Ansprüche 1 bis 9, wobei die Vorrichtung wenigstens eine Recheneinrichtung aufweist, die eingerichtet ist, eine Umgebungskarte (UK) zu aktualisieren und in die Umgebungskarte (UK) eine Information über einen Sichtbereich (SB) für eine Landmarke (L1) einzutragen, der angibt, in welchem Bereich die Landmarke (L1) von einer Straße aus sichtbar ist.

15. Computerlesbares Speichermedium für die Verwendung bei dem Verfahren nach einem der Ansprüche 1 bis 9 oder den Vorrichtungen nach einem der Ansprüche 10 bis 12 oder 14, **dadurch gekennzeichnet, dass** in dem computerlesbaren Speichermedium eine Umgebungskarte (UK) abgespeichert ist, in die eine Information über einen Sichtbereich (SB) für eine Landmarke (L1) eingetragen ist, der angibt, in welchem Bereich die Landmarke (L1) von einer Straße aus sichtbar ist.

## Claims

1. A method for updating a map of a surrounding area, which is used in the control of a vehicle (10), wherein a vehicle (10), while driving on a roadway, attempts to detect a landmark (L1) recorded in the map of the surrounding area (UK) using sensors, wherein, if the landmark (L1) could not be detected using sensors, a deletion hypotheses is developed by the vehicle (10), which is transmitted to an external central computer (320), and wherein the deletion hypothesis is verified in the external central computer (320) and, if the deletion hypothesis is verified, the landmark (L1) is deleted from the map of the surrounding area (UK) in accordance with the deletion hypothesis, **characterized in that** information relating to a visibility range (SB) for the landmark (L1) is recorded in the map of the surrounding area (UK), which indicates the range within which the landmark (L1) is visible from a road, wherein in the vehicle (10), during an evaluation of the map of the surrounding area (UK), a step of evaluating the information relating to the visibility range (SB), which is recorded in the map of the surrounding area (UK), is performed for the landmark (L1) to be detected.

2. The method of claim 1, wherein the visibility range (SB) is recorded in the map of the surrounding area (UK) by indicating the circle segments (KS1 - KS16) of a circle in the center of which the landmark (L1) is positioned, or wherein the visibility range (SB) is recorded in the map of the surrounding area (UK) by indicating the roadway segments (FS1 - FS10) of a roadway on which the vehicle (10) is travelling from which the landmark (L1) is detectable.

3. The method of claim 2 in its second alternative, wherein the roadway segments (FS1 - FS10) have a defined length and only those roadway segments of the roadway (FS1 - FS10) on which the vehicle (10) is travelling, in which the landmark (L1) remains completely detectable using sensors during the journey through the roadway segment (FS1 - FS10), are recorded in the map of the surrounding area (UK) as the visibility range (SB).

4. The method of claim 1, wherein the indication of the visibility range (SB) is recorded in the map of the surrounding area (UK) by indicating a number of further landmarks (L4 - L7) from which a line of sight to the verified landmark (L1) exists.

5. The method of one of the preceding claims, wherein the visibility range is indicated separately for the different traffic lanes of a roadway.

6. The method of one of the preceding claims, wherein a temporary concealment of landmarks by obstacles is detected and wherein the detection of landmarks (L3 - L7) using sensors is suspended on those roadway sections on which an obstacle is recognized by which a line of sight to such landmarks (L3 - L7) is blocked.

7. The method of one of the preceding claims, wherein a multiple, successive detection of the landmark (L1) is performed in order to corroborate the deletion hypothesis, wherein, for the multiple, successive detection of the landmark, a minimum driving distance is predefined, which the vehicle must have travelled before it attempts the next detection of the landmark.

8. The method of one of the preceding claims, wherein, in order to verify the deletion hypothesis, a request is transmitted from the external central computer (320) to a number of further vehicles which are located in the area in which the landmark (L1) concerned is located, which then attempt for their part to detect the landmark (L1) concerned using sensors and transmit a report relating to the result of the attempt back to the external central computer (320).

9. The method of claim 8, wherein the deletion hypothesis is verified if a sufficient certainty exists that the deletion hypothesis is correct through statistical evaluation of the reports on the results of the attempt.

10. A device for the execution in a vehicle of the method of one of the preceding claims, wherein the device is equipped with at least one computing device (184, 40) which is configured to execute the steps of evaluating the data for the detection of a landmark (L1) using sensors, developing a deletion hypothesis if the detection of the landmark (L1) using sensors fails, and evaluating a map of the surrounding area (UK) for the detection of the landmark (L1) using sensors, wherein, during the evaluation of the map of the surrounding area (UK), the computing device (184, 40) evaluates the information relating to the visibility range for the landmark (L1) to be detected, which is recorded in the map of the surrounding area (UK).

11. The device of claim 10, wherein the computing device (184, 40) is configured to evaluate the data from environment sensors (150, 186) in order to determine whether landmarks (L3 - L7) are temporarily concealed by obstacles, and to suspend the detection of landmarks (L3 - L7) using sensors on those roadway sections on which an obstacle by which a line of sight to such landmarks (L3 - L7) is blocked has been identified through the detection using sensors.

12. The device of claim 10 or 11, wherein the computing device (184, 40) is configured to perform a multiple, successive detection of the landmark (L1) in order to corroborate the deletion hypothesis, wherein, for the multiple, successive detection of the landmark (L1), a minimum driving distance is predefined, which the vehicle (10) must have travelled before it attempts the next detection of the landmark (L1).

13. A vehicle, **characterized in that** the vehicle (10) has a device of one of claims 10 to 12.

14. A device for the execution in a central computer of the method of one of claims 1 to 9, wherein the device has at least one computing device which is configured to update a map of a surrounding area (UK) and to record information relating to a visibility range (SB) for a landmark (L1) in the map of the surrounding area (UK), which indicates the range within which the landmark (L1) is visible from a road.

15. A computer-readable storage medium for use in the method of one of claims 1 to 9 or in the devices of one of claims 10 to 12 or 14, **characterized in that** a map of a surrounding area (UK) is stored in the computer-readable storage medium, in which information relating to a visibility range (SB) for a landmark (L1) is recorded, indicating the range within which the landmark (L1) is visible from a road.

## Revendications

1. Procédé de mise à jour d'un plan des environs qui est utilisé pour la commande d'un véhicule (10), un véhicule (10) essayant, lorsqu'il circule sur une voie de circulation, de détecter par capteur un point de repère (L1) enregistré sur le plan des environs (UK), dans lequel, si le point de repère (L1) n'a pas pu être détecté par capteur, une hypothèse d'effacement est établie par le véhicule (10) et envoyée à un ordinateur central externe (320) et l'hypothèse d'effacement est vérifiée dans l'ordinateur central externe (320) et, si l'hypothèse d'effacement est vérifiée, le point de repère (L1) est effacé du plan (UK) conformément à l'hypothèse d'effacement, **caractérisé en ce que** sur le plan des environs (UK) est inscrite une information concernant une zone de visibilité (SB) pour le point de repère (L1), laquelle indique dans quelle zone le point de repère (L1) est visible depuis une route, une étape d'analyse de l'information concernant la zone de visibilité (SB) pour le point de repère (L1) à détecter, inscrite sur le plan des environs (UK), étant effectuée lors d'une analyse du plan des environs (UK) dans le véhicule (10).

2. Procédé selon la revendication 1, dans lequel la zone de visibilité (SB) est inscrite sur le plan des environs (UK) avec indication des segments de cercle (KS1 - KS16) d'un cercle au centre duquel est positionné le point de repère (L1), ou dans lequel la zone de visibilité (SB) est inscrite sur le plan des environs (UK) avec indication des segments de voie de circulation (FS1 - FS10) d'une voie de circulation sur laquelle circule le véhicule (10), à partir desquels le point de repère (L1) peut être détecté.

3. Procédé selon la revendication 2 dans sa deuxième alternative, dans lequel les segments de voie de circulation (FS1 - FS10) présentent une longueur définie et seuls les segments de voie de circulation de la voie de circulation (FS1 - FS10) sur lesquels le véhicule (10) circule sont inscrits sur le plan des environs (UK) en tant que zone de visibilité (SB) et dans lesquels le point de repère (L1) reste entièrement détectable par capteur lors du passage du segment de voie de circulation (FS1 - FS10).

4. Procédé selon la revendication 1, dans lequel l'indication de la zone de visibilité (SB) est inscrite sur le plan des environs (UK) avec indication d'un certain nombre d'autres points de repère (L4 - L7) à partir desquels il existe une ligne de visibilité vers le point de repère (L1) vérifié.

5. Procédé selon l'une des revendications précédentes, dans lequel l'indication de la zone de visibilité s'effectue séparément pour les différentes voies d'une chaussée.

6. Procédé selon l'une des revendications précédentes, dans lequel un masquage temporaire de points de repère par des obstacles est détecté et dans lequel la détection de points de repère (L3 - L7) par capteur est suspendue sur les tronçons de chaussée sur lesquels un obstacle a été détecté par capteur et par lequel une ligne de visibilité vers ces points de repère (L3 - L7) est bloquée.

7. Procédé selon l'une des revendications précédentes, dans lequel une détection successive multiple du point de repère (L1) est effectuée afin de confirmer l'hypothèse d'effacement, une distance minimale que le véhicule (10) doit avoir parcourue avant de tenter la détection suivante du point de repère (L1) étant prédéfinie pour la détection successive multiple du point de repère.

8. Procédé selon l'une des revendications précédentes, dans lequel, pour vérifier l'hypothèse d'effacement, une demande est envoyée par l'ordinateur central externe (320) à un certain nombre d'autres véhicules qui circulent dans la zone dans laquelle le point de repère concerné (L1) est localisé, lesquels tentent à leur tour de détecter par capteur le point de repère concerné (L1) et renvoient un rapport sur le résultat d'essai à l'ordinateur central externe (320).

9. Procédé selon la revendication 8, dans lequel l'hypothèse d'effacement est vérifiée lorsqu'il existe une certitude suffisante que l'hypothèse d'effacement est correcte grâce à une analyse statistique des rapports sur les résultats d'essais.

10. Dispositif pour la mise en œuvre à bord d'un véhicule du procédé selon l'une des revendications précédentes, le dispositif étant équipé d'au moins un équipement informatique (184, 40) configuré pour effectuer les étapes d'analyse des données pour la détection sensorielle d'un point de repère (L1), l'établissement d'une hypothèse d'effacement en cas d'échec de la détection sensorielle du point de repère (L1) et l'analyse d'un plan des environs (UK) pour la détection sensorielle du point de repère (L1), l'équipement informatique (184, 40) analysant, lors de l'analyse du plan des environs (UK), l'information inscrite sur le plan des environs (UK) concernant la zone de visibilité pour le point de repère à détecter (L1).

11. Dispositif selon la revendication 10, dans lequel l'équipement informatique (184, 40) est configuré pour analyser les données de capteurs d'environnement (150, 186) pour savoir s'il y a un masquage temporaire de points de repère (L3 - L7) par des obstacles et pour suspendre la détection sensorielle de points de repère (L3 - L7) sur les tronçons de chaussée sur lesquels un obstacle a été détecté par capteur et par lequel une ligne de visibilité vers ces points de repère (L3 - L7) est bloquée.

12. Dispositif selon la revendication 10 ou 11, dans lequel l'équipement informatique (184, 40) est configuré pour effectuer une détection successive multiple du point de repère (L1) afin de confirmer l'hypothèse d'effacement, une distance minimale que le véhicule (10) doit avoir parcourue avant de tenter la détection suivante du point de repère (L1) étant prédéfinie pour la détection successive multiple du point de repère (L1).

13. Véhicule **caractérisé en ce que** le véhicule (10) présente un dispositif selon l'une des revendications 10 à 12.

14. Dispositif pour la mise en œuvre par l'ordinateur central du procédé selon l'une des revendications 1 à 9, le dispositif présentant au moins un équipement informatique qui est configuré pour mettre à jour un plan des environs (UK) et pour inscrire sur le plan des environs (UK) une information concernant une zone de visibilité (SB) pour un point de repère (L1), laquelle indique dans quelle zone le point de repère (L1) est visible depuis une route.

15. Support de stockage lisible par ordinateur, destiné à être utilisé dans le procédé selon l'une des revendications 1 à 9 ou dans les dispositifs selon l'une des revendications 10 à 12 ou 14, **caractérisé en ce qu'**un plan des environs (UK) est stocké dans le support de stockage lisible par ordinateur et sur lequel est inscrite une information concernant une zone de visibilité (SB) pour un point de repère (L1), laquelle indique dans quelle zone le point de repère (L1) est visible depuis une route.
